# EUROPÄISCHE PATENTSCHRIFT

(11) **EP 2 419 700 B1**
(45) Veröffentlichungstag und Bekanntmachung des Hinweises auf die Patenterteilung: **12.11.2014**
(21) Anmeldenummer: 09801655.3
(22) Anmeldetag: 10.12.2009
(51) Int. Cl.: G01D 5/48

(54) **TURBOMASCHINENKOMPONENTE UND DAMIT AUSGERÜSTETE TURBOMASCHINE**
TURBOMACHINE COMPONENT AND TURBOMACHINE EQUIPPED THEREWITH
COMPOSANT DE TURBOMACHINE ET TURBOMACHINE ÉQUIPÉE DE CELUI-CI

(30) Priorität: 17.04.2009 DE 102009017935
(43) Veröffentlichungstag der Anmeldung: 22.02.2012
(73) Patentinhaber: MAN Diesel & Turbo SE, 86153 Augsburg (DE)
(72) Erfinder: MICHLIGK, Thomas, 13467 Berlin (DE)
(86) Internationale Anmeldenummer: PCT/DE2009/050071
(87) Internationale Veröffentlichungsnummer: WO 2010/118715

(56) Entgegenhaltungen:
- DE-A1- 19 703 616
- US-A1- 2009 033 175

## Beschreibung

Die Erfindung betrifft eine Turbomaschinenkomponente und eine mit einer solchen Turbomaschinenkomponente ausgerüstete Turbomaschine.

Bei Turbomaschinen, wie z.B. Turbokompressoren einschließlich der darin verbauten Komponenten und Turbomaschinensträngen einschließlich der im jeweiligen Turbomaschinenstrang angeordneten Komponenten wie Getriebe, Kupplungen usw., kann es durch die im Betrieb hohe Belastung der jeweiligen Turbomaschine bzw. Turbomaschinenkomponenten notwendig sein, eine Anzahl von deren Turbomaschinenkomponenten während des Betriebs messtechnisch zu überwachen.

Ferner ist es bei solchen hoch belasteten Turbomaschinen bzw. Turbomaschinenkomponenten entscheidend, dass qualitativ einwandfreie Turbomaschinenkomponenten in der Turbomaschine verbaut sind, um den Ansprüchen hinsichtlich Gewährleistung gerecht werden zu können.

Der Erfindung liegt die Aufgabe zugrunde, eine Turbomaschinenkomponente zum Einsatz in einer Turbomaschine bereitzustellen, wobei die Turbomaschinenkomponente einerseits in bequemer und sicherer Weise messtechnisch überwachbar ist und andererseits eindeutig als Originalteil kennzeichenbar ist, so dass Nicht-Originalteile zuverlässig von Originalteilen unterscheidbar sind. Der Erfindung liegt ferner die Aufgabe zugrunde, eine mit solch einer Turbomaschinenkomponente ausgerüstete Turbomaschine bereitzustellen.

Die oben genannten Aufgaben werden mit einer Turbomaschinenkomponente gemäß Anspruch 1 bzw. mit einer Turbomaschine gemäß Anspruch 4 gelöst. Weiterbildungen der Erfindung sind in den jeweils abhängigen Ansprüchen definiert.

Gemäß einem ersten Aspekt der Erfindung ist eine Turbomaschinenkomponente zum Einsatz in einer Turbomaschine bereitgestellt, wobei die Turbomaschinenkomponente aufweist: eine Sensoreinheit, die an der Turbomaschinenkomponente angebracht ist, wobei die Sensoreinheit einen Sensor zum Erfassen eines zu überwachenden Parameters der Turbomaschinenkomponente und einen Sender aufweist zum zur Verarbeitung Übermitteln eines zu dem Parameter korrespondierenden Messsignals an eine Auswerteeinheit der Turbomaschine, wobei der Sender der Sensoreinheit eingerichtet ist, gemeinsam mit dem Messsignal ein kodiertes Identifikationssignal an die Auswerteeinheit auszusenden, welches einen die Sensoreinheit identifizierenden Identifikationskode enthält, und wobei die Sensoreinheit derart eingerichtet ist, dass eine Trennung der Sensoreinheit von der Turbomaschinenkomponente nur unter funktioneller Zerstörung der Sensoreinheit möglich ist.

Die erfindungsgemäß ausgebildete Turbomaschinenkomponente ist sowohl in bequemer und sicherer Weise messtechnisch überwachbar als auch eindeutig als Originalteil kennzeichenbar, so dass Nicht-Originalteile zuverlässig von Originalteilen unterscheidbar sind.

Dadurch, dass der Sender der Sensoreinheit eingerichtet ist, gemeinsam mit dem Messsignal ein kodiertes Identifikationssignal bzw. einen die Sensoreinheit identifizierenden Identifikationskode auszusenden, kann sowohl das Messsignal als auch die jeweilige Sensoreinheit in einer Auswerteeinheit einer Turbomaschine eindeutig zugeordnet werden. Vom Hersteller der Turbomaschine können somit bestimmte Identifikationskodes für die Sensoreinheiten bzw. damit die zugehörigen Turbomaschinenkomponenten vergeben werden, um Originalteile eindeutig zu kennzeichnen.

Dadurch, dass die Sensoreinheit gewissermaßen unlösbar bzw. nur zerstörend lösbar an der Turbomaschinenkomponente angebracht ist, kann sicher verhindert werden, dass Sensoreinheiten von ausgesonderten Originalteilen an Nicht-Originalteilen angebracht werden.

Gemäß einer Ausführungsform der Erfindung ist die Sensoreinheit von einer AOW-Sensoreinheit (AOW - Akustisch-Oberflächen-Wellen) gebildet, wobei die Sensoreinheit einen passiven Transponder aufweist, in den der Sender mit wenigstens einem Reflektor integriert ist.

Erfindungsgemäß wird vorgeschlagen, AOW-Sensoren z.B. als passive Transponder/Sensor-Einheiten (kurz Sensoreinheiten) für verschiedene Messaufgaben in Turbomaschinen, deren Komponenten oder in deren Antriebssträngen einzusetzen. Damit ist unter anderem eine drahtlose und wartungsfreie Messdatenübertragung möglich.

Mittels akustischer Oberflächenwellen lassen sich z.B. digitale Identifikationsmarken herstellen. Dazu kann auf einem geeigneten Substrat ein Schallwandler aufgebracht werden, der über eine Antenne elektromagnetische Signale empfangen und in akustische Oberflächenwellen umwandeln kann. Diese werden dann von einem oder mehreren auf dem Substrat angebrachten Reflektoren zurückgeworfen und über den Schallwandler und die Antenne wieder abgegeben. Die so erzeugte Impulsfolge bzw. der so erzeugte Identifikationskode kann nun mit einem geeigneten bzw. auf die Kodierung angepassten Lesegerät ausgelesen werden.

AOW-Sensoreinheiten können somit unterschiedlichste Messsensoren an Turbomaschinenkomponenten eindeutig identifizieren. AOW-Sensoreinheiten überstehen hohe Temperaturen von bis zu 400°C und Vibrationen.

Mit anderen Worten ist neben den offensichtlichen Vorteilen hinsichtlich Überwachung, Conditionmonitoring und Wartung durch geeignete unterschiedliche Kodierung der Reflektoren auf der Sensoroberfläche ein charakteristisches Antwortsignal zur Identifikation und Zuordnung des Messsignals zu einer Sensoreinheit oder Turbomaschinenkomponente möglich. Sind die Sensoreinheiten wie gemäß der Erfindung mit den Turbomaschinenkomponenten unlösbar bzw. nur zerstörend lösbar verbunden, so ist neben der Messaufgabe bei herstellerspezifischer Kodierung der Reflektoren auch eine eindeutige Identifikation von Originalbauteilen möglich.

Möglichkeiten zur grundsätzlichen Realisierung einer AOW-Sensoreinheit bzw. SAW-Sensoreinheit (SAW - Surface Acoustic Wave) sind beispielsweise in WO 2006/110936 A1 aufgezeigt.

Bevorzugt ist die Turbomaschinenkomponente eine Turbokompressor-Komponente.

Als Turbomaschinen werden erfindungsgemäß insbesondere Turbokompressoren und Turbinen einschließlich der darin verbauten Komponenten sowie Turbomaschinenstränge einschließlich der im jeweiligen Turbomaschinenstrang angeordneten Komponenten wie Getriebe, Motoren usw. angesehen.

Gemäß einem zweiten Aspekt der Erfindung ist eine Turbomaschine mit einer Mehrzahl von Turbomaschinenkomponenten und einer Auswerteeinheit zur Überwachung der Turbomaschine bereitgestellt, wobei wenigstens eine der Turbomaschinenkomponenten aufweist: eine Sensoreinheit, die an der Turbomaschinenkomponente angebracht ist, wobei die Sensoreinheit einen Sensor zum Erfassen eines zu überwachenden Parameters der Turbomaschinenkomponente und einen Sender aufweist zum zur Verarbeitung Übermitteln eines zu dem Parameter korrespondierenden Messsignals an die Auswerteeinheit der Turbomaschine, wobei der Sender der Sensoreinheit eingerichtet ist, gemeinsam mit dem Messsignal ein kodiertes Identifikationssignal an die Auswerteeinheit auszusenden, welches einen die Sensoreinheit identifizierenden Identifikationskode enthält und wobei die Auswerteeinheit eingerichtet ist, das Identifikationssignal zu empfangen und zu verarbeiten, und wobei die Sensoreinheit derart eingerichtet ist, dass eine Trennung der Sensoreinheit von der Turbomaschinenkomponente nur unter funktioneller Zerstörung der Sensoreinheit möglich ist.

Gemäß der Erfindung kann die Auswerteeinheit in die Turbomaschine integriert sein oder auch außerhalb der Turbomaschine, wie z.B. in einer Messwarte oder einem Leitstand, angeordnet sein.

Die erfindungsgemäß ausgebildeten Turbomaschinenkomponenten der Turbomaschine sind in bequemer und sicherer Weise messtechnisch überwachbar und durch den Identifikationskode eindeutig als Originalteil kennzeichenbar, so dass Nicht-Originalteile zuverlässig von Originalteilen unterscheidbar sind.

Dadurch, dass der Sender der Sensoreinheit eingerichtet ist, gemeinsam mit dem Messsignal das kodierte Identifikationssignal bzw. einen die Sensoreinheit identifizierenden Identifikationskode auszusenden, kann sowohl das Messsignal als auch die jeweilige Sensoreinheit in der Auswerteeinheit der Turbomaschine eindeutig zugeordnet werden. Vom Hersteller der Turbomaschine können somit bestimmte herstellerspezifische Identifikationskodes für die Sensoreinheiten bzw. damit die zugehörigen Turbomaschinenkomponenten vergeben werden, um Originalteile eindeutig zu kennzeichnen.

Dadurch, dass die Sensoreinheit gewissermaßen unlösbar bzw. nur zerstörend lösbar an der jeweiligen Turbomaschinenkomponente angebracht ist, kann sicher verhindert werden, dass Sensoreinheiten von ausgesonderten Originalteilen an Nicht-Originalteilen angebracht werden.

Gemäß einer Ausführungsform der erfindungsgemäßen Turbomaschine ist die Sensoreinheit von einer AOW-Sensoreinheit gebildet, wobei die Sensoreinheit einen passiven Transponder aufweist, in den der Sender mit wenigstens einem Reflektor integriert ist.

Damit ist neben den offensichtlichen Vorteilen hinsichtlich Überwachung, Conditionmonitoring und Wartung durch geeignete unterschiedliche Kodierung der Reflektoren auf der Sensoroberfläche ein charakteristisches Antwortsignal zur Identifikation und Zuordnung des Messsignals zu einer Sensoreinheit oder Turbomaschinenkomponente möglich. Sind die Sensoreinheiten wie gemäß der Erfindung mit den Turbomaschinenkomponenten unlösbar bzw. nur zerstörend lösbar verbunden, so ist neben der Messaufgabe bei herstellerspezifischer Kodierung der Reflektoren auch eine eindeutige Identifikation von Originalbauteilen möglich.

Gemäß einer weiteren Ausführungsform der erfindungsgemäßen Turbomaschine weist die Auswerteeinheit einen Speicher auf, in dem eine Anzahl von z.B. für die Turbomaschine einzigartigen Identifikationskodes abspeicherbar sind, wobei die Auswerteeinheit eingerichtet ist, einen von dem Sender übermittelten Identifikationskode mit in dem Speicher gespeicherten Identifikationskodes zu vergleichen.

Diese Ausgestaltung der Erfindung stellt eine sichere und praktikable Lösung zum Hinterlegen herstellerspezifischer Identifikationskodes und zum Erkennen von Originalteilen bzw. Nicht-Originalteilen sowie zum Erkennen bzw. Zuordnen komponentenspezifischer Messsignale bereit.

Gemäß noch einer weiteren Ausführungsform der erfindungsgemäßen Turbomaschine weist die Auswerteeinheit eine Verarbeitungslogik auf, die eingerichtet ist, in dem Speicher gespeicherte jeweilige Identifikationskodes jeweils unterschiedlichen Sensoren zuzuordnen. Bevorzugt ist die Verarbeitungslogik der Auswerteeinheit eingerichtet, so dass jeder Sensor einer einzigen Turbomaschinenkomponente zuordenbar ist.

Diese Ausgestaltungen der Erfindung unterstützen in vorteilhafter Weise eine schnelle und zuverlässige Erkennung bzw. Zuordnung komponentenspezifischer Messsignale.

Gemäß noch einer Ausführungsform der erfindungsgemäßen Turbomaschine weist die Auswerteeinheit eine Entscheidungslogik auf, die eingerichtet ist, so dass in dem Speicher gespeicherte Identifikationskodes als für einen Betrieb der Turbomaschine zulässig definiert sind, wobei die Entscheidungslogik eingerichtet ist, den Betrieb der Turbomaschine zu sperren, wenn der von dem Sender bzw. der Sensoreinheit empfangene Identifikationskode mit keinem der in dem Speicher abgespeicherten Identifikationskodes übereinstimmt.

Mit dieser Ausgestaltung der Erfindung kann auf einfache und sichere Weise ein Betrieb der Turbomaschine mit Nicht-Originalteilen verhindert werden. Mit anderen Worten ist somit in der Auswerteeinheit für die Messsignale eine Vollständigkeitsprüfung hinsichtlich der Original-Turbomaschinenkomponenten möglich. Über eine Verriegelung kann das Starten der Turbomaschine verhindert werden, wenn die Kodierung für eine oder mehrere Original-Turbomaschinenkomponenten fehlt. Damit ist zusätzlich zur Messaufgabe ein wirksamer Schutz vor dem Einsatz von Nicht-Originalteilen möglich.

Bevorzugt ist die Turbomaschine von einem Turbokompressor gebildet.

Im Folgenden wird die Erfindung anhand einer bevorzugten Ausführungsform und unter Bezugnahme auf die beigefügten Figuren detaillierter beschrieben.

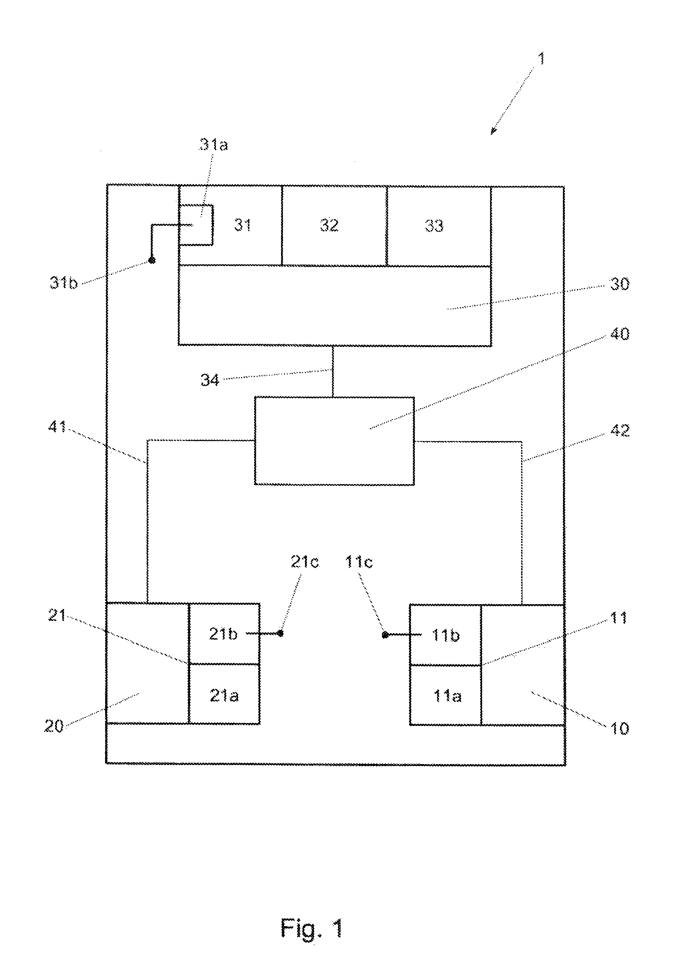

- Fig.1: zeigt eine schematische Ansicht einer Turbomaschine gemäß einer Ausführungsform der Erfindung.

Fig.1 zeigt in schematischer Ansicht eine als Turbokompressor ausgebildete Turbomaschine 1 gemäß einer Ausführungsform der Erfindung.

Die Turbomaschine 1 weist eine Mehrzahl von Turbomaschinenkomponenten 10, 20, eine Auswerteeinheit 30 zur Überwachung der Turbomaschinenkomponenten 10, 20 bzw. der Turbomaschine 1 und eine Steuervorrichtung 40 zum Steuern der Turbomaschinenkomponenten 10, 20 bzw. der Turbomaschine 1 auf.

Obwohl die Auswerteeinheit 30 gemäß Fig.1 in die Turbomaschine 1 integriert ist, kann diese gemäß einer nicht gezeigten alternativen Ausführungsform auch außerhalb der Turbomaschine 1 angeordnet sein, wie z.B. in einer Messwarte oder einem Leitstand (beides nicht gezeigt).

Wie aus Fig.1 ersichtlich, ist die Auswerteeinheit 30 über eine elektrische Leitung 34 mit der Steuervorrichtung 40 signalgekoppelt und ist die Steuervorrichtung 40 über Signalübermittlungsstrecken (drahtlos) 41, 42 mit den Turbomaschinenkomponenten 10, 20 signalgekoppelt.

Die Auswerteeinheit 30 und die Steuervorrichtung 40 können in Form von Hardware und/oder Software als voneinander separate Einheiten oder auch zu einer Einheit kombiniert ausgeführt sein.

Die zwei gezeigten Turbomaschinenkomponenten 10, 20 stellen nur eine exemplarische Auswahl aus einer Gesamtheit der Turbomaschinenkomponenten der Turbomaschine 1 dar, wobei gemäß dieser exemplarischen Ausführungsform der Erfindung eine erste Turbomaschinenkomponente 10 eine Laufradstufe der Turbomaschine 1 und eine zweite Turbomaschinenkomponente 20 einen Nachleitapparat der Turbomaschine 1 bilden können.

Die erste Turbomaschinenkomponente 10 weist eine in Form einer AOW-Sensoreinheit (AOW - Akustisch-Oberflächen-Wellen) ausgebildete Sensoreinheit 11 auf, die an der ersten Turbomaschinenkomponente 10 angebracht ist, wobei die Sensoreinheit 11 einen Sensor 11 a in Form eines Temperatursensors zum Erfassen eines zu überwachenden Parameters in Form der Temperatur der ersten Turbomaschinenkomponente 10 und einen passiven Transponder 11 b mit einem Sender in Form einer Reflektoren- (nicht separat gezeigt) und Antennen 11c - Anordnung aufweist zum zur Verarbeitung Übermitteln eines zu dem Parameter korrespondierenden Messsignals an die Auswerteeinheit 30 der Turbomaschine 1.

Die zweite Turbomaschinenkomponente 20 weist eine in Form einer AOW-Sensoreinheit ausgebildete Sensoreinheit 21 auf, die an der zweiten Turbomaschinenkomponente 20 angebracht ist, wobei die Sensoreinheit 21 einen Sensor 21 a in Form eines Temperatursensors zum Erfassen eines zu überwachenden Parameters in Form der Temperatur der zweiten Turbomaschinenkomponente 20 und einen passiven Transponder 21 b mit einem Sender in Form einer Reflektoren- (nicht separat gezeigt) und Antennen 21c - Anordnung aufweist zum zur Verarbeitung Übermitteln eines zu dem Parameter korrespondierenden Messsignals an die Auswerteeinheit 30 der Turbomaschine 1.

Die Sender 11 b, 21 b der Sensoreinheiten 11,21 sind jeweils eingerichtet, gemeinsam mit dem Messsignal ein kodiertes Identifikationssignal an die Auswerteeinheit 30 auszusenden, welches einen die jeweilige Sensoreinheit 11, 21 eindeutig identifizierenden Identifikationskode enthält, wobei die Auswerteeinheit 30 eingerichtet ist, das Identifikationssignal zu empfangen und zu verarbeiten.

Die Sensoreinheiten 11,21 sind jeweils so an ihrer zugehörigen Turbomaschinenkomponente 10 bzw. 20 befestigt, dass eine Trennung der jeweiligen Sensoreinheit 11, 21 von der betreffenden Turbomaschinenkomponente 10 bzw. 20 nur unter funktioneller Zerstörung der jeweiligen Sensoreinheit 11,21 möglich ist.

Dies kann z.B. durch eine strahlungs-, temperatur- und lösungsmittelbeständige Aufbringung der Sensoreinheiten 11,21 auf die jeweils zugehörige Turbomaschinenkomponente 10 bzw. 20 realisiert sein. Desweiteren kann die Turbomaschinenkomponente 10, 20 ein lösbar daran montiertes z.B. zusätzliches Teil aufweisen, welches bei gewünschter Aussonderung der jeweiligen Turbomaschinenkomponente 10, 20 zu entfernen ist oder sogar bei Demontage der jeweiligen Turbomaschinenkomponente 10, 20 zwangsläufig zu entfernen ist, wobei die jeweilige Sensoreinheit 11, 21 strahlungs-, temperatur- und lösungsmittelbeständig aufgebracht teilweise auf der jeweiligen Turbomaschinenkomponente 10, 20 und teilweise auf dem jeweiligen zusätzlichen Teil angeordnet ist. Andere Realisierungen sind natürlich ebenfalls möglich.

Die Auswerteeinheit 30 weist eine Verarbeitungslogik 31, eine Entscheidungslogik 32 und einen Speicher 33 auf, die verarbeitungstechnisch miteinander gekoppelt sind oder sogar als eine integrale Einheit, z.B. in Form eines integralen Schaltkreises, ausgebildet sind.

In dem Speicher 33 sind turbomaschinenherstellerseitig vorgegeben eine Anzahl von einzigartigen Identifikationskodes abgespeichert, wobei die Verarbeitungslogik 31 eingerichtet ist, die in dem Speicher 33 gespeicherten jeweiligen Identifikationskodes den unterschiedlichen Sensoren 11a und 21 a zuzuordnen. Die Verarbeitungslogik 31 ist ferner so eingerichtet, dass jeder Sensor 11a, 21 a bzw. jede Sensoreinheit 11, 21 derjenigen Turbomaschinenkomponente 10 bzw. 20 zugeordnet ist, an der die jeweilige Sensoreinheit 11,21 befestigt ist.

Zum Aktivieren des passiven Transponders 11 b, 21 b der Sensoreinheiten 11, 21 und zum Empfangen von deren jeweiligen Ausgangssignalen weist die Verarbeitungslogik 31 einen Transponder 31 a mit einer Antenne 31 b auf.

Die Entscheidungslogik 32 der Auswerteeinheit 30 ist so eingerichtet, dass die in dem Speicher 33 gespeicherten Identifikationskodes als für einen Betrieb der Turbomaschine 1 zulässig definiert sind. Darauf aufbauend ist die Entscheidungslogik 32 ferner eingerichtet, den Betrieb der Turbomaschine 1 zu sperren, wenn einer der von den Sensoreinheiten 11, 21 empfangenen Identifikationskodes mit keinem der in dem Speicher 33 abgespeicherten Identifikationskodes übereinstimmt. Zu diesem Zweck übermittelt die Entscheidungslogik 32 über die Leitung 34 ein Zustandssignal (Betrieb erlaubt oder Betrieb nicht erlaubt) an die Steuervorrichtung 40, auf dessen Basis die Steuervorrichtung 40 den Betrieb der Turbomaschinenkomponenten 10, 20 bzw. der Turbomaschine 1 zulässt oder sperrt.

Mit anderen Worten wird in der Auswerteeinheit 30 bei einer gewünschten Inbetriebnahme der Turbomaschine 1 eine Vollständigkeitsprüfung hinsichtlich des Vorhandenseins von ausschließlich Originalteilen als Turbomaschinenkomponenten 10, 20 durchgeführt. Sind Nicht-Originalteile als Turbomaschinenkomponenten 10, 20 verbaut, so dass die Kodierung für eine oder mehrere als Originalteil ausgeführte Turbomaschinenkomponenten 10, 20 fehlt, wird über die beschriebene Verriegelung das Starten der Turbomaschine 1 verhindert. Damit ist zusätzlich zur Messaufgabe ein wirksamer Schutz vor dem Einsatz von Nicht-Originalteilen möglich.

### Bezugszeichenliste

- 1: Turbomaschine
- 10: Turbomaschinenkomponente
- 11: Sensoreinheit
- 11a: Sensor
- 11b: Transponder
- 11c: Antenne
- 20: Turbomaschinenkomponente
- 21: Sensoreinheit
- 21a: Sensor
- 21b: Transponder
- 21c: Antenne
- 30: Auswerteeinheit
- 31: Verarbeitungslogik
- 31a: Transponder
- 31b: Antenne
- 32: Entscheidungslogik
- 33: Speicher
- 34: Leitung
- 40: Steuervorrichtung
- 41: Signalübermittlungsstrecke
- 42: Signalübermittlungsstrecke

## Patentansprüche

1. Turbomaschinenkomponente (10, 20) zum Einsatz in einer Turbomaschine (1), aufweisend:
eine Sensoreinheit (11, 21), die an der Turbomaschinenkomponente (10, 20) angebracht ist,
wobei die Sensoreinheit (11, 21) einen Sensor (11 a, 21 a) zum Erfassen eines zu überwachenden Parameters der Turbomaschinenkomponente (10, 20) und einen Sender aufweist zum zur Verarbeitung Übermitteln eines zu dem Parameter korrespondierenden Messsignals an eine Auswerteeinheit (30) der Turbomaschine (1),
wobei der Sender der Sensoreinheit (11, 21) eingerichtet ist, gemeinsam mit dem Messsignal ein kodiertes Identifikationssignal an die Auswerteeinheit (30) auszusenden, welches einen die Sensoreinheit (11, 21) identifizierenden Identifikationskode enthält, und
wobei die Sensoreinheit (11, 21) derart eingerichtet ist, dass eine Trennung der Sensoreinheit (11, 21) von der Turbomaschinenkomponente (10, 20) nur unter funktioneller Zerstörung der Sensoreinheit (11, 21) möglich ist.

2. Turbomaschinenkomponente (10, 20) gemäß Anspruch 1, wobei die Sensoreinheit (11, 21) von einer AOW-Sensoreinheit gebildet ist, und wobei die Sensoreinheit (11, 21) einen passiven Transponder (11b, 21b) aufweist, in den der Sender mit wenigstens einem Reflektor integriert ist.

3. Turbomaschinenkomponente (10, 20) gemäß Anspruch 1 oder 2, wobei die Turbomaschinenkomponente (10, 20) als Turbokompressor-Komponente oder Gasturbinen-Komponente oder Dampfturbinen-Komponente oder Expander-Komponente ausgebildet ist.

4. Turbomaschine (1) mit einer Mehrzahl von Turbomaschinenkomponenten (10, 20) und einer Auswerteeinheit (30) zur Überwachung der Turbomaschine (1), wobei wenigstens eine der Turbomaschinenkomponenten (10, 20) aufweist:
eine Sensoreinheit (11, 21), die an der Turbomaschinenkomponente (10, 20) angebracht ist,
wobei die Sensoreinheit (11, 21) einen Sensor (11a, 21a) zum Erfassen eines zu überwachenden Parameters der Turbomaschinenkomponente (10, 20) und einen Sender aufweist zum zur Verarbeitung Übermitteln eines zu dem Parameter korrespondierenden Messsignals an die Auswerteeinheit (30) der Turbomaschine (1),
wobei der Sender der Sensoreinheit (11,21) eingerichtet ist, gemeinsam mit dem Messsignal ein kodiertes Identifikationssignal an die Auswerteeinheit (30) auszusenden, welches einen die Sensoreinheit (11, 21) identifizierenden Identifikationskode enthält und wobei die Auswerteeinheit (30) eingerichtet ist, das Identifikationssignal zu empfangen und zu verarbeiten, und
wobei die Sensoreinheit (11, 21) derart eingerichtet ist, dass eine Trennung der Sensoreinheit (11, 21) von der Turbomaschinenkomponente (10 ,20) nur unter funktioneller Zerstörung der Sensoreinheit (11, 21) möglich ist.

5. Turbomaschine (1) gemäß Anspruch 4, wobei die Sensoreinheit (11,21) von einer AOW-Sensoreinheit gebildet ist, und wobei die Sensoreinheit (11,21) einen passiven Transponder (11 b, 21 b) aufweist, in den der Sender mit wenigstens einem Reflektor integriert ist.

6. Turbomaschine (1) gemäß Anspruch 4 oder 5, wobei die Auswerteeinheit (30) einen Speicher (33) aufweist, in dem eine Anzahl von für die Turbomaschine (1) einzigartigen Identifikationskodes abspeicherbar sind, und wobei die Auswerteeinheit (30) eingerichtet ist, einen von dem Sender übermittelten Identifikationskode mit in dem Speicher (33) gespeicherten Identifikationskodes zu vergleichen.

7. Turbomaschine (1) gemäß Anspruch 6, wobei die Auswerteeinheit (30) eine Verarbeitungslogik (31) aufweist, die eingerichtet ist, in dem Speicher (33) gespeicherte jeweilige Identifikationskodes jeweils unterschiedlichen Sensoren (11 a, 21 a) zuzuordnen.

8. Turbomaschine (1) gemäß Anspruch 7, wobei die Verarbeitungslogik (31) der Auswerteeinheit (30) eingerichtet ist, so dass jeder Sensor (11 a, 21 a) einer einzigen Turbomaschinenkomponente (10, 20) zuordenbar ist.

9. Turbomaschine (1) gemäß einem der Ansprüche 6 bis 8, wobei die Auswerteeinheit (30) eine Entscheidungslogik (32) aufweist, die eingerichtet ist, so dass in dem Speicher (33) gespeicherte Identifikationskodes als für einen Betrieb der Turbomaschine (1) zulässig definiert sind, und wobei die Entscheidungslogik (32) eingerichtet ist, den Betrieb der Turbomaschine (1) zu sperren, wenn der von dem Sender empfangene Identifikationskode mit keinem der in dem Speicher (33) abgespeicherten Identifikationskodes übereinstimmt.

10. Turbomaschine (1) gemäß einem der Ansprüche 4 bis 9, wobei die Turbomaschine (1) von einem Turbokompressor oder einer Gasturbine oder einer Dampfturbine oder einem Expander gebildet ist.

## Claims

1. A turbomachine component (10, 20) for use in a turbomachine (1), comprising:
a sensor unit (11, 21), which is attached to the turbomachine component (10, 20),
wherein the sensor unit (11, 21) comprises a sensor (11a, 21a) for capturing a parameter of the turbomachine component (10, 20) and a transmitter for transmitting for processing a measurement signal corresponding to the parameter to an evaluation unit (30) of the turbomachine (1),
wherein the transmitter of the sensor unit (11, 21) is equipped to send out jointly with the measurement signal an encoded identification signal to the evaluation unit (30) which contains an identification code identifying the sensor unit (11, 21), and
wherein the sensor unit (11, 21) is equipped in such a manner that a separation of the sensor unit (11, 21) from the turbomachine component (10, 20) is only possible subject to the functional destruction of the sensor unit (11, 21).

2. The turbomachine component (10, 20) according to claim 1, wherein the sensor unit (11, 21) is formed by an AOW-sensor unit, and wherein the sensor unit (11, 21) comprises a passive transponder (11b, 21b), in which the transmitter with at least one reflector is integrated.

3. The turbomachine component (10, 20) according to claim 1 or 2, wherein the turbomachine component (10, 20) is designed as a turbocompressor component or a gas turbine component or steam turbine component or expander component.

4. A turbomachine (1) with a plurality of turbomachine components (10, 20) and an evaluation unit (30) for monitoring the turbomachine (1), wherein at least one of the turbomachine components (10, 20) comprises:
a sensor unit (11, 21), which is attached to the turbomachine component (10, 20),
wherein the sensor unit (11, 21) comprises a sensor (11a, 21a) for capturing a parameter of the turbomachine component (10, 20) to be monitored and a transmitter for transmitting for processing a measurement signal corresponding to the parameter to the evaluation unit (30) of the turbomachine (1),
wherein the transmitter of the sensor unit (11, 21) is equipped to jointly with the measurement signal send out an encoded identification signal to the evaluation unit (30), which contains an identification code identifying the sensor unit (11, 21) and wherein the evaluation unit (30) is equipped to receive and process the identification signal, and
wherein the sensor unit (11, 21) is equipped in such a manner that a separation of the sensor unit (11, 21) from the turbomachine component (10, 20) is only possible subject to the functional destruction of the sensor unit (11, 21).

5. The turbomachine (1) according to claim 4, wherein the sensor unit (11, 21) is formed by an AOW-sensor unit, and wherein the sensor unit (11, 21) comprises a passive transponder (11b, 21b) in which the transmitter with at least one reflector is integrated.

6. The turbomachine (1) according to claim 4 or 5, wherein the evaluation unit (30) comprises a memory (33) in which a number of identification codes that are unique for the turbomachine (1) can be stored and wherein the evaluation unit (30) is equipped for comparing an identification code transmitted by the transmitter with identification codes stored in the memory (33).

7. The turbomachine (1) according to claim 6, wherein the evaluation unit (30) comprises a processing logic (31) which is equipped in order to assign respective identification codes stored in the memory (33) in each case to different sensors (11a, 21a).

8. The turbomachine (1) according to claim 7, wherein the processing logic (31) of the evaluation unit (30) is equipped so that each sensor (11a, 21a) can be assigned to a single turbomachine component (10, 20).

9. The turbomachine (1) according to any one of the claims 6 to 8, wherein the evaluation unit (30) comprises a decision logic (32) which is equipped so that identification codes stored in the memory (33) are defined as permissible for operation of the turbomachine (1) and wherein the decision logic (32) is equipped to disable the operation of the turbomachine (1) when the identification code received from the transmitter does not correspond to any of the identification codes stored in memory (33).

10. The turbomachine (1) according to any one of the claims 4 to 9, wherein the turbomachine (1) is formed by a turbocompressor or a gas turbine or a steam turbine or an expander.

## Revendications

1. Composants de turbomachine (10, 20) à utiliser dans une turbomachine (1), comportant :
une unité de capteur (11, 21), qui est montée sur les composants de turbomachine (10, 20) ;
dans lequel l'unité de capteur (11, 21) comporte un capteur (11a, 21a) pour détecter un paramètre à surveiller des composants de turbomachine (10, 20) et un émetteur pour transmettre un signal de mesure correspondant au paramètre à une unité d'évaluation (30) de la turbomachine (1) à des fins de traitement,
dans lequel l'émetteur de l'unité de capteur (11, 21) est conçu afin d'émettre conjointement au signal de mesure d'un signal d'identification codé à l'unité d'évaluation (30), qui contient un code d'identification identifiant l'unité de capteur (11, 21), et
dans lequel l'unité de capteur (11, 21) est conçue de telle sorte qu'une séparation de l'unité de capteur (11, 21) des composants de turbomachine (10, 20) soit possible seulement en cas de destruction fonctionnelle de l'unité de capteur (11, 21).

2. Composants de turbomachine (10, 20) selon la revendication 1, dans lequel l'unité de capteur (11, 21) est formée par une unité de capteur AOW, et dans lequel l'unité de capteur (11, 21) comporte un transpondeur passif (11b, 21b), dans lequel le capteur est intégré avec au moins un réflecteur.

3. Composants de turbomachine (10, 20) selon la revendication 1 ou 2, dans lequel les composants de turbomachine (10, 20) sont conçus comme des composants de turbocompresseur ou des composants de turbine à gaz ou des composants de turbine à vapeur ou des composants d'expanseur.

4. Turbomachine (1) comportant une pluralité de composants de turbomachine (10, 20) et une unité d'évaluation (30) pour surveiller la turbomachine (1), dans laquelle au moins un des composants de turbomachine (10, 20) comporte :
une unité de capteur (11, 21), qui est montée sur les composants de turbomachine (10, 20) ;
dans laquelle l'unité de capteur (11, 21) comporte un capteur (11a, 21a) pour détecter un paramètre à surveiller des composants de turbomachine (10, 20) et un émetteur pour transmettre un signal de mesure correspondant au paramètre à une unité d'évaluation (30) de la turbomachine (1) à des fins de traitement,
dans laquelle l'émetteur de l'unité de capteur (11, 21) est conçu afin d'émettre conjointement au signal de mesure d'un signal d'identification codé à l'unité d'évaluation (30), qui contient un code d'identification identifiant l'unité de capteur (11, 21), et dans lequel l'unité d'évaluation (30) est conçue afin de recevoir et traiter le signal d'identification, et
dans laquelle l'unité de capteur (11, 21) est conçue de telle sorte qu'une séparation de l'unité de capteur (11, 21) des composants de turbomachine (10, 20) soit possible seulement en cas de destruction fonctionnelle de l'unité de capteur (11, 21).

5. Turbomachine (1) selon la revendication 4, dans laquelle l'unité de capteur (11, 21) est formée par une unité de capteur AOW, et dans laquelle l'unité de capteur (11, 21) comporte un transpondeur passif (11b, 21b), dans laquelle le capteur est intégré avec au moins un réflecteur.

6. Turbomachine (1) selon la revendication 4 ou 5, dans lequel l'unité d'évaluation (30) comporte une mémoire (33), dans laquelle une pluralité de codes d'identification uniques à la turbomachine (1) peuvent être mémorisés, et dans laquelle l'unité d'évaluation (30) est conçue de manière à comparer un code d'identification transmis par l'émetteur avec un code d'identification mémorisé dans la mémoire (33).

7. Turbomachine (1) selon la revendication 6, dans laquelle l'unité d'évaluation (30) comporte une logique de traitement (31), qui est conçue afin de coordonner le code d'identification respectif mémorisé dans la mémoire (33) à des capteurs respectivement différentes (11a, 21a).

8. Turbomachine (1) selon la revendication 7, dans laquelle la logique de traitement (31) de l'unité d'évaluation (30) est conçue de telle sorte que chaque capteur (11a, 21a) puisse être coordonné à un composant de turbomachine unique (10, 20).

9. Turbomachine (1) selon une des revendications 6 à 8, dans laquelle l'unité d'évaluation (30) comporte une logique de décision (32), qui est conçue de telle sorte que le code d'identification mémorisé dans la mémoire (33) soit défini comme autorisé pour un fonctionnement de la turbomachine (1), et dans laquelle la logique de décision (32) est conçue de manière à bloquer le fonctionnement de la turbomachine (1), quand le code d'identification reçu par l'émetteur ne concorde pas avec un code d'identification mémorisé dans la mémoire (33).

10. Turbomachine (1) selon une des revendications 4 à 9, dans laquelle la turbomachine (1) est formé par un turbocompresseur ou une turbine à gaz ou une turbine à vapeur ou un expanseur.
